(19) **Europäisches Patentamt**

**European Patent Office**

**Office européen des brevets**

(11) Veröffentlichungsnummer: **0 366 822 B1**

(12) # EUROPÄISCHE PATENTSCHRIFT

(45) Veröffentlichungstag der Patentschrift: **07.10.92**

(21) Anmeldenummer: **88118316.4**

(22) Anmeldetag: **03.11.88**

(51) Int. Cl.⁵: **A23L 1/314**

(54) **Verfahren zur Herstellung von fett- und kalorienarmen Fleischspeisen und Wurstprodukten unter Verwendung von filtrierter Milch.**

(43) Veröffentlichungstag der Anmeldung:
**09.05.90 Patentblatt 90/19**

(45) Bekanntmachung des Hinweises auf die Patenterteilung:
**07.10.92 Patentblatt 92/41**

(84) Benannte Vertragsstaaten:
**AT BE CH DE ES FR GB IT LI LU NL SE**

(56) Entgegenhaltungen:
**WO-A-85/03621**
**DE-A- 2 639 177**
**FR-A- 2 156 854**
**FR-A- 2 231 407**

**FSTA, 88-02-50010, 88009860; Z. KRCAL et al.: "Effect of added milk protein concentrate on some properties of meat products", & VYS-KUMNY USTAV MLIEKARENSKY, ZILIUA, CZE-CHOSLOVAKIA PRUMYSL POTRAVIN, vol. 37, N. 8, p. 424,1986**

(73) Patentinhaber: **Hohenester, Hermann, Dr.med.vet.**
**Strass 21**
**W-8269 Burgkirchen/Alz(DE)**

(72) Erfinder: **Hohenester, Hermann, Dr. med.vet.**
**Strass 21**
**W-8269 Burgkirchen/Alz(DE)**
Erfinder: **Hohenester, Wolfgang**
**Bräugasse 25**
**W-8260 Mühldorf(DE)**
Erfinder: **Hohenester, Ilse**
**Strass 21**
**W-8269 Burgkirchen/Alz(DE)**

(74) Vertreter: **Hansen, Bernd, Dr.rer.nat. et al Hoffmann, Eitle & Partner Patentanwälte Arabellastrasse 4 Postfach 81 04 20**
**W-8000 München 81(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von fett- und kalorienarmen Fleischspeisen und Wurstprodukten, bei dem zerkleinertes Fleisch mit gefrorener bzw. gekühlter Milch und Wasser verarbeitet wird.

Über 50 % der Bevölkerung in den Industriestaaten ist übergewichtig und leidet unter den damit zusammenhängenden Krankheiten, wie Herz- und Kreislauferkrankungen, Stoffwechselkrankheiten, Arteriosklerose, Diabetes, Bluthochdruck. Die Übergewichtigkeit basiert in der Regel auf dem Verzehr von zu vielen Lebensmitteln und vor allem von Lebensmitteln mit zu hohem Fett- und Kaloriengehalt. Herkömmliche Wurst- und Fleischerzeugnisse besitzen zwischen 25 und 50 % Fettstoffe und einen Energiegehalt von 250 bis 500 kcal/100 g und bedingen damit beim Verzehr eine hohe Fett- und Kalorienaufnahme.

Ernährungsphysiologische Gründe zielen darauf ab, den Fett- und Kaloriengehalt in den gebräuchlichen Wurst- und Fleischwaren, die als Fett/Fleisch-Mischprodukte fast durchwegs einen bedeutend höheren Fettgehalt im Vergleich zum Proteingehalt (Eiweißgehalt) aufweisen, zu reduzieren. Dies kann dadurch geschehen, daß man in den Wurst- und Fleischerzeugnissen Fett und Speck durch mageres Fleisch ersetzt. Solche Produkte sind aber naturgemäß sehr teuer und entsprechen hinsichtlich Konsistenz und Schmackhaftigkeit nicht den Erwartungen der Verbraucher.

Kritische Größen bei der Fleischverarbeitung bzw. Wurstherstellung sind das Wasserbindungsvermögen des Fleisches und die Fettemulgierung, die vom Verhältnis von Fett, Wasser und Eiweiß im Brät abhängen. Lange Zeit ging man davon aus, daß ein geringer Fettgehalt (kleiner 25 %) im Brät zu einer nachteiligen Beeinflussung der Konsistenz, des Aussehens und des Geschmacks des Endproduktes führt.

In DE-A-22 03 582, DE-A-26 39 177.5, WO 85/03621 werden Verfahren zur Herstellung fett- und kalorienarmer Fleischspeisen und Wurstprodukte beschrieben, bei denen ein grosser Teil des Fettgehalts durch Milch, Milchprodukte und/oder Milchpulver ersetzt wird. Die Milch- und Fleischbestandteile ergänzen sich dabei vorteilhaft in Bezug auf den Gehalt an Aminosäuren, Fettsäuren, Vitaminen, Mineralstoffen und Spurenelementen, so daß ernährungsphysiologisch wertvolle Produkte mit niedrigem Fettgehalt (3 bis 7 g/100 g) und kleinem Energiegehalt (80 bis 130 kcal/100g) gewonnen werden, die auch hinsichtlich der sensorischen Eigenschaften den herkömmlichen Fleisch- und Wurstwaren nahekommen. Die Produkte sind vergleichbar mit magerem Rind- bzw. Schweinefleisch, da sie ähnliche Protein-, Fett- und Wasserwerte besitzen.

Bei den obengenannten Herstellungsverfahren wird zunächst Fleisch im Wolf zerkleinert und anschließend im Kutter unter Zugabe von Salz und Eis feinst zerkleinert. Dieser Fleischmischung setzt man nun entsprechende Mengen an Milch (Magermilch, Vollmilch) oder Milchprodukten (Magermilchpulver, Vollmilchpulver, Quark, Frischkäse, aufgeschlossenes Milcheiweiß) und ggf. weitere Mengen an magerem und hochwertigem Fleisch zu und homogenisiert die Gesamtmischung im Kutter. Das so erhaltene Brät kann nun gewürzt, gegart, geräuchert und abgefüllt werden. In dem Fleischverarbeitungsverfahren nach DE-A-26 39 177.5 wird die oben hergestellte Gesamtmischung vor der Endverarbeitung mit einer im Kutter gebildeten, gekühlten bzw. gefrorenen Emulsion aus Milch, aufgeschlossenem Milcheiweiß (Caseinat) und Pflanzenöl homogenisiert. Diese Verarbeitungsweise führt zu einer weiteren qualitativen und quantitativen, ernährungsphysiologischen Verbesserung des Endproduktes. Nach WO 85/03621 ist es vorteilhaft, der homogenisierten Gesamtmischung aus Fleisch, Wasser/Eis, Milch(produkten) eine gekühlte bzw. gefrorene Emulsion aus Milch, Milchpulver, Wasser und Öl zuzugeben und dann zum Verbraucherprodukt zu verarbeiten.

Ein Problem bei der Zubereitung der obenbeschriebenen Fleisch/Milch-Produkte besteht darin, daß die einsetzbare Menge an Milch, bedingt durch den Wassergehalt der Milch, begrenzt ist. Für höhere Anteile an Milch reicht die normale Wasserbindefähigkeit des üblicherweise bearbeiteten Fleisches nicht aus, die Konsistenz des Produktes wird zu weich bzw. der Wasserabsatz im Endprodukt wird zu groß. Durch die Verwendung von Milchpulver in der Fleisch-Wasser-Emulsion anstelle normaler Milch kann der Trockensubstanzanteil der Milch im Endprodukt erhöht werden (WO 85/03621). Es hat sich aber gezeigt, daß durch den Einsatz von Milchpulver ein erhöhter Milchzucker- und Milchsalzeintrag stattfindet, der bei hohem Milchanteil ein zu trockenes, zu süßes und unangenehm salziges Produkt zur Folge hat, das zudem relativ früh bei Lagerung durch die Bildung von Milchsäure verdirbt. Weiterhin wird das Milchpulver über eine umständlich herstellbare Emulsion in das Fleisch- bzw. Wurstprodukt eingearbeitet. Das Milchpulver muß mit Wasser oder auch mit Milch erst gelöst und anschließend emulgiert werden. Dazu muß man die Mischung erhitzen, dann das Öl zusetzen, emulgieren und anschließend wieder kühlen bzw. gefrieren. Ein weiterer Nachteil besteht darin, daß der Gehalt an Lactose, Proteinen und salzen im Milchpulver festgesetzt ist, und die Mengen dieser Bestandteile in den Emulsionen nur durch Wasserzusatz und Fettzugabe variiert bzw. angepaßt werden können. Die Proteine sind im Milchpulver zudem durch die Erhitzung häufig stark denaturiert und können unter Umständen zu einem brandigen Geschmack des Endproduktes führen.

FSTA, 88-02-50010, 88009860: Z. KRCAL et al.: "Effect of added milk protein concentrate on some properties of meat products" beinhaltet die Zugabe von Milchsäureprotein-Konzentrat zu der Fleischrohsubstanz, wobei das Konzentrat hergestellt wird, indem man UV-behandelte und diafiltrierte Milch, die mit Natriumhydroxid modifiziert ist, sprühtrocknet.

Der Erfindung liegt die Aufgabe zugrunde, ein Verfahren zur Herstellung fett- bzw. kalorienarmer Fleischspeisen und Wurstprodukte auf der Basis von Milch zu schaffen, mit dem der Trockensubstanzanteil der Milch in dem Fleisch-bzw. Wursterzeugnis erhöht werden kann, ohne damit Nachteile in der Konsistenz, dem Aussehen und dem Geschmack der Produkte in Kauf nehmen zu müssen. Insbesondere soll ein Verfahren bereitgestellt werden, mit dem der Gehalt an Lactose, Proteinen und Salzen im Fleisch- bzw. Wursterzeugnis variiert werden kann, und mit dem der Produktionsablauf vereinfacht werden kann.

Die Aufgabe wird erfindungsgemäß durch ein Verfahren gelöst, bei dem man eine zerkleinerte Grundmasse aus Fleisch mit Milch, die bei einem Druck von 2 bis 40 bar und bei einer Porengröße der Filtermembran von 0,3 bis 100 nm filtriert wurde, in gefrorenem bzw. gekühltem Zustand und ggf. mit Wasser/Eis homogenisiert und emulgiert, und das so hergestellte Brät in üblicher Weise zum Endprodukt weiter verarbeitet.

Das oben beschriebene Verfahren erlaubt die Verarbeitung beliebiger Fleischsorten, wobei Schweine-, Kalb- und/oder Rindfleisch bevorzugt sind. Vorteilhaft ist auch die Verwendung von Fleisch von anderen Warmblütern wie z.B. Pferd und Wild.

Für die Herstellung bestimmter Produkte kann es auch vorteilhaft sein, in die Mischung aus Fleisch bzw. Fleischbestandteilen, filtrierter Milch und ggf. Wasser/Eis zusätzlich Fischprodukte und/oder Getreide-, Gemüse- bzw. Obstprodukte einzuarbeiten.

Eine weitere vorteilhafte Ausführungsform der vorliegenden Erfindung besteht darin, gefrorene bzw. stark gekühlte Milch zunächst mit einer zerkleinerten Grundmasse aus Fleisch und ggf. Fischprodukten und/oder Getreide-, Gemüse- bzw. Obstprodukten und ggf. mit Wasser zu homogenisieren, und die Milch dann zusammen mit der gesamten Masse zu filtrieren. Bei Anwendung dieses Verfahrens wird man bevorzugt die gesamte, homogenisierte Menge anschließend mittels Filtration auf einen Trockenstoffgehalt von bis zu 57 % einstellen und schließlich in bekannter Weise würzen, garen und abfüllen. Es erweist sich bei dieser Ausführungsform häufig als vorteilhaft, durch z.B. Starterkulturzusatz oder durch natürliche Säuerung angesäuerte Milch zu verwenden. Die Säure wird dann durch den Filtrationsprozeß abgetrennt.

Bei einer speziellen Ausführung des erfindungsgemäßen Verfahrens wird das Fleisch zunächst gegebenenfalls getumbelt und anschließend durch Pressen, Zentrifugieren, Passieren, Quetschen oder ähnliche Maßnahmen in wasserlösliches Eiweiß und Bindegewebseiweiß aufgetrennt, wobei lezteres unter Verwendung von Milch, Elektrolytlösungen, Salzlösungen, Proteinlösungen oder Genußsäurelösungen oder Mischungen von diesen als Lösungsvermittler aufgeschlossen wird, und anschließend von dieser Lösung mittels Zentrifugieren und/oder Filtrieren und/oder anderer geeigneter Verfahren überflüssiges Wasser, Salze, Säuren, Elektrolyte abgetrennt werden, bevor das wasserlösliche Fleisch und das aufgeschlossene Bindegewebe unter Zugabe von Milch, filtrierter Milch, Wasser/Eis und weiteren Zutaten zu einer Grundmasse verarbeitet werden. Mittels dieser Verfahrensvariante werden dem Bindegewebeanteil des Fleisches optimale Lösungsmittel zugesetzt, die eine weitere Aufschließung ermöglichen, die aber gleichzeitig im Endprodukt nicht erwünscht sind und mit diesem Verfahren wieder eliminiert werden können. Die Aufschließung des Bindegewebsanteil des Fleisches durch Zerkleinern und Zusatz von Wasser/Eis und Lösungsvermittleren bewirkt durch die nachfolgende Separierung eine beträchtliche Verbesserung der Qualität des Produktes.

In dem erfindungsgemäßen Verfahren wird die Menge der filtrierten Milch je nach Verarbeitungsweise bevorzugt in einem gewichtsmäßigen Verhältnis von 0,01:1 bis 20:1 in Bezug auf die Fleischmenge bzw. in Bezug auf die Menge der Mischung aus Fleisch/Fisch/Getreide-, Gemüse- und Obstprodukten eingestellt.

Die Filtration der Milch bei den Bedingungen gemäß Anspruch 1 bewirkt, daß niedermolekulare Bestandteile, z.B. Salze, Wasser, Lactose, bevorzugt von der Membran durchgelassen werden, während die hochmolekularen Stoffe, wie z.B. Proteine, von der Membran bevorzugt zurückgehalten werden. Die für diesen Trennprozeß geeigneten Membranen sind üblicherweise aus Zelluloseacetat, Kunststoffpolymeren oder Metalloxiden aufgebaut. Bei der Filtration wird die Milch in eine proteinreiche Fraktion (Retentat) und eine proteinarme bzw. proteinlose Fraktion (Permeat) aufgetrennt. Das hinsichtlich des Eiweißgehaltes aufkonzentrierte Retentat ist dabei als filtrierte Milch zu verstehen.

Die filtrierte Milch besitzt gegenüber normaler Milch einen deutlich höheren Proteingehalt und wesentlich kleinere Mengen an Wasser, Salzen und Lactose. Die geringere Menge an Wasser bewirkt, daß die filtrierte Milch in größeren Mengen vom Fleisch gebunden werden kann, ohne daß es zum Wasserabsatz kommt. Die Verwendung filtrierter Milch führt dazu, daß, bedingt durch den ohnehin höheren Gehalt an Proteinen und durch die erhöhte Aufnahme durch das Fleisch, der Proteingehalt des Endproduktes in einfacherweise gesteigert werden kann. Da bei der filtrierten Milch gleichzeitig der Lactosegehalt reduziert ist, kommt es bei einer größeren Einsatzmenge dieser Milch nicht zu einer durch Milchsäurebildung bedingten Verderbnis der Waren während der Lagerung, wie dies bei Verwendung von Milchpulver häufig der Fall ist.

Ein weiterer Vorteil des erfindungsgemäßen Verfahrens besteht darin, daß je nach Filtrationsbedingungen (Filtermaterial, Porengröße, Druck) der Protein-, Lactose- und Salzgehalt in der filtrierten Milch und damit im Endprodukt gesteuert werden kann, während beim Einsatz von Milchpulver diese Gehalte fixiert sind.

Desweiteren kann die Herstellung und die Verarbeitung der filtrierten Milch bei einer Temperatur im physiologischen Bereich erfolgen, so daß keine Denaturierung der Proteine und Vitamine und damit keine nachteilige Beeinflussung des Geschmacks und der Wertigkeit der Fleisch- bzw. Wursterzeugnisse auftritt.

Die filtrierte Milch wird z.B. bei der Herstellung der Fleisch- bzw. Wurstspeisen im gefrorenen bzw. gekühlten Zustand mit zerkleinertem Fleisch und ggf. Wasser/Eis und ggf. Fett/Öl im Kutter vermischt, homogenisiert und emulgiert. Ein weiteres Verfahren besteht darin, die noch nicht filtrierte Milch zunächst mit dem zerkleinerten Fleisch und ggf. Wasser/Eis und ggf. Fett/Öl zu vermischen, und dann die Gesamtmasse zu filtrieren. Im folgenden sind Beispiele für die Herstellung von Fleischspeisen unter Verwendung von filtrierter Milch angeführt.

Beispiel 1: Herstellung von fettarmer Brühwurst

10 kg Fleisch
10 kg gefrorene oder gekühlte, filtrierte Milch
 + Salz ( + Phosphat bei kaltem Fleisch)
 + Gewürze

Beispiel 2: Herstellung von fettarmer Kochwurst

3 kg gekochtes Fleisch
3 kg Leber
4 kg gekühlte, filtrierte Milch
 + Salz
 + Gewürze

Beispiel 3: Herstellung von Rohwurst

10 kg gefrorenes Rindfleisch
0,1-10 kg gefrorene, filtrierte Milch

 + Salz
 + Gewürze
 + ggf. Starterkultur

Beispiel 4: Herstellung von Brühwurst unter Verwendung von speziell separiertem Fleisch und Bindegewebe

Fleisch und Bindegewebe werden mit Milch und/oder Wasser und Salz und ggf. Elektrolyten und/oder Genußsäuren unter hohem Druck von Knochen gelöst/gespült. Die erhaltene Lösung/Suspension wird anschließend feinst zerkleinert, homogenisiert und über Filtration, ggf. in Kombination mit einer Zentrifugation oder einem anderen geeigneten Trennverfahren, auf einen Trockenstoffgehalt bis zu 80 % eingestellt.
5 kg dieser Masse werden mit
5 kg Fleisch
5 kg gekühlter/gefrorener filtrierter Milch
 + Salz
 + Gewürzen
zu einem Brät verarbeitet.

Beispiel 5: Herstellung einer speckartigen Grundmasse als Zusatz zu Wurstwaren, Fleischwaren, Pasteten und andere Lebensmittel

a) 10 kg separiertes Bindegewebe und 40-80 kg gefrorene/gekühlte Milch werden feinst zerkleinert und mit geeigneten Mengen an Wasser und Salz homogenisiert und anschließend durch Filtration, ggf. in Kombination mit Zentrifugieren oder einem anderen geeigneten Trennverfahren, auf einen TS-Gehalt von ca. 60 % eingestellt.

Diese Masse, die ggf. vorher gekühlt, gefroren, gefriergetrocknet oder gegart, getrocknet und gekühlt wird, wird anstelle von Speck/Fett in üblicher Weise in Brühwurst, Kochwurst, Rohwurst oder Pasteten und anderen Lebensmitteln verwendet. Zur ernährungsphysiologischen Verbesserung kann der Masse vor oder nach dem Zerkleinern Salze (Elektrolyte), Gewürze, diätetisches Fett oder Öle oder Fettersatz (Wachse etc.) zugesetzt werden.
b) 10 kg Bindegewebe
1-10 kg filtrierte Milch oder Milch
10-100 kg Wasser/Eis
 + Salz, ggf. Elektrolyte, Genußsäuren oder Zucker oder Gemische von diesen
werden in einem Cutter oder einer anderen geeigneten Einrichtung feinst zerkleinert und homogenisiert, anschließend durch Filtrieren, ggf. in Kombination mit Zentrifugieren, auf eine Masse von 11-60 kg eingedickt. Diese Masse wird mit 1-100 kg Fett/Speck/Öl gemischt und homogenisiert und anschließend gekühlt, gefroren, gefriergetrocknet oder gegart, getrocknet und gekühlt und in beliebiger Weise bei der Zubereitung von Lebensmitteln als Zutat verwendet.

Ein mehr oder weniger großer Anteil des Bindegewebes kann durch pflanzliche Stoffe (Mucopolysaccharide, Polysaccharide, Fasern, Agar, etc.) ersetzt werden.

Beispiel 6: Herstellung von Brühwurst

10 kg Fleisch
40 kg gekühlte/gefrorene Milch
+ Salze
+ ev. Elektrolyte und/oder Milchzucker und/oder Genußsäuren
werden feinst zerkleinert und homogenisiert und anschließend durch Filtration auf einen TS-Gehalt von ca. 35% eingestellt. Diese Masse wird gewürzt und in üblicher Weise zubereitet.

Beispiel 7: Herstellung von Brühwurst

10 kg Fleisch
5 kg Speckersatz aus Beispiel 5
6 kg gefrorene Milch
+ Salz
+ Gewürz

Beispiel 8: Herstellung von Kochwurst nach Art einer Leberwurst/Leberpastete

3 kg Fleisch
3 kg Leber
6 kg Speckersatz aus Beispiel 5
+ Salz
+ Gewürze
Die Herstellung erfolgt in üblicher Weise bzw. in einem Kochkutter mit anschließender Homogenisierung.

Beispiel 9: Herstellung von Zungenwurst/Pressack

3 kg Zungenfleisch gekocht
3 kg Backenfleisch gekocht
3 kg Blut
3 kg Speckersatz aus Beispiel 5
+ Salz
+ Gewürze

Beispiel 10: Herstellung von Rohwurst

10 kg gefrorenes Rindfleisch
3-10 kg gefr. Speckersatz aus Beispiel 5
+ Salz
+ Gewürze
+ ev. Starterkultur

Beispiel 11: Herstellung von Fischwurst

5 kg Fischfleisch (tiefgefroren + Phosphat)
5 kg Fleisch
10 kg filtrierte Milch gekühlt
+ Salz
+ Gewürze

Beispiel 12: Herstellung von Fischpastete

10 kg Fischfleisch
5-20 kg filtrierte Milch
+ Salz
+ Gewürze

Beispiel 13: Herstellung von Fischstäbchen/Crevettenimitation

10 kg Fischfleisch (tiefgefroren + Phosphat)
10-30 kg Speckersatz aus Beispiel 5 oder
5 kg filtrierte Milch
+ Salz
+ Gewürze
Die Abfüllung bzw. Formung geschieht als Stäbchen oder in beliebiger anderer Form. Im Anschluß daran wird erhitzt und abgepackt.

Beispiel 14: Herstellung einer Frucht-Milch-Masse als Einlage für Fleisch- und Wurstspeisen

10 kg Bananen ohne Schale
0,1-100 kg filtrierte Milch
+ Elektrolyte/Salze/Gewürze u. ev. Genußsäuren werden zerkleinert und homogenisiert, anschließend gekühlt, gefroren/gefriergetrocknet oder/und getrocknet. Der Masse kann im Rohzustand Starterkultur (Milchsäurebildner o.ä.) zugegeben werden.

Anstelle von Banane, frisch oder getrocknet, können alle beliebigen Fruchtsorten und Gemüsesorten und/oder Mischungen davon, frisch oder getrocknet oder als Konzentrat, verwendet werden.

z.B. Rohsalami:
10 kg gefrorenes Fleisch
5 kg gefriergetrocknete oder getrocknete und gefrorene oder erhitzte und anschließend getrocknete und gefrorene Frucht-Milch-Masse
+ Salz + Gewürze + ev. Starterkultur
Die Abfüllung erfolgt großkalibrig oder kleinkalibrig.

Die Reifung und Räucherung sowie die Abpackung geschieht wie üblich.

Beispiel 15: Herstellung einer Einlage für Brühwurst, Pasteten, Rohsalami oder andere Lebensmittel

5 kg Sellerie
1 kg filtrierte Milch
+ Salze/Elektrolyte + Gewürze werden feinst zerkleinert und homogenisiert, im Kochkutter gekocht und homogenisiert und anschließend geformt, getrocknet/gefriergetrocknet. Anstelle von Sellerie können alle beliebigen Gemüsesorten oder Mischungen von diesen verwendet werden. Die Zugabe zu den Endprodukten erfolgt in beliebiger Menge.

Beispiel 16: Herstellung einer roten Einlage für Brühwurst, Pasteten, Rohsalami, etc.

3 kg rote Beete
7 kg filtrierte Milch
+ Salze/Elektrolyte + Gewürze
Die Zubereitung erfolgt wie in Beispiel 15. Die Zugabe zu den Endprodukten geschieht in beliebiger Menge.

Beispiel 17: Herstellung einer Frucht-Cerealien-Mischung als Einlage für Wurst/Fleischprodukte, Pasteten und andere Lebensmittel

3 kg Ananas-Kern-Masse
1 kg Getreideschrot oder -flocken (z.B. Hafer)
6 kg filtrierte Milch
+ Gewürze/Elektrolyte etc.
Die Mischung wird wie in Beispiel 15 zubereitet und zu den Endprodukten in beliebiger Menge gegeben oder als Snack abgepackt.
z.B. "Salami Ananas":
10 kg gefr. Rindfleisch
5 kg Ananas-Ceralien-Milch-Mischung getrocknet, gefroren + Salze + Gewürze + ev. Starterkultur
Abfüllung und Reifung erfolgt in herkömmlicher Weise.

Beispiel 18: Herstellung einer Milch-Ceralien-Frucht-Zubereitung als Zutat für Fleisch/Wurstprodukte, Pasteten und andere Lebensmittel (Snack)

10 kg Milch
10 kg Fruchtsaft (Orange oder Mischung)
1 kg feines Getreideschrot oder/und Leinsamen
+ ev. Elektrolyte/Gewürze werden homogenisiert und anschließend durch Filtration, ggf. in Kombination mit Zentrifugieren oder einem anderen geeigneten Verfahren, auf einen TS-Gehalt von ca. 55% eingestellt. Nach Zugabe von Würzstoffen und ev. Elektrolyten wird die Masse geformt, getrocknet/gefriergetrocknet oder erhitzt und getrocknet/gefriergetrocknet und als Zutat zu Lebensmitteln oder als Snack zubereitet/ verpackt.

Beispiel 19: Rohwurst mit Fruchteinlage

z.B.
10 kg gefrorenes Fleisch
4 kg gefrorene, filtrierte Milch (TS ca. 40%)

4 kg gefriergetrocknete oder getrocknete und gekühlte/gefrorene Bananen
Fleisch und gefrorene Milch werden zusammen mit Salz, Gewürzen und ev. Starterkultur im Kutter bis zu einer beliebigen Körnung zerkleinert, und diesem Gemenge werden die gefrorenen Bananen zugegeben und zusammen weiter zerkleinert bis zu einer beliebig kleinen Körnung.
Abfüllung, Reifung und Räuchern erfolgt in beliebiger Weise.
Anstelle von getrockneten Bananen können alle beliebigen Früchte oder/und getrocknete, gefriergetrocknete oder/und gekochte Gemüsearten verwendet werden.

Beispiel 20:

Geschälte Kartoffeln werden geschnitten/gewürfelt und anschließend in Wasser mit Ascorbinsäure kurz gekocht. Anstelle von Ascorbinsäure können andere Antioxidantien verwendet werden. Im Anschluß an die Kochung wird das Gemüse getrocknet bzw. gefriergetrocknet.
10 kg gefrorenes Fleisch
1-5 kg gefrorene, filtrierte Milch (TS ca. 40%)
+ Salz + Gewürze + ev. Starterkultur
werden bis zu einer beliebigen Körnung im Kutter zerkleinert. Während der Zerkleinerung werden
3-6 kg gefrorene Kartoffelwürfel,
die wie oben beschrieben zubereitet wurden, zugegeben.
Abfüllung, Reifung, Räucherung geschieht wie üblich.
Anstelle von Kartoffeln eignen sich alle Gemüsearten, insbesondere helle Gemüsearten, wie z.B. Sellerie.
Die in den Beispielen hergestellten Fleischspeisen und Wurstprodukte zeichnen sich durch einen geringen Fett-bzw. Kaloriengehalt und durch gute sensorische Eigenschaften aus.

**Patentansprüche**

1. Verfahren zur Herstellung von fett- und kalorienarmen Fleischspeisen und Wurstprodukten, bei dem eine zerkleinerte Grundmasse aus Fleisch mit gefrorener bzw. stark gekühlter Milch und ggf. Wasser vermischt und emulgiert wird, dadurch **gekennzeichnet**, daß die Herstellung unter Verwendung von Milch erfolgt, die bei einem Druck im Bereich von 2 bis 40 bar und bei einer Porengröße der Filtermembran im Bereich von 0,3 bis 100 nm filtriert wurde.

2. Verfahren nach Anspruch 1 dadurch **gekennzeichnet**, daß Schweine-, Kalb- und/oder Rindfleisch eingesetzt wird.

**3.** Verfahren nach Anspruch 1 dadurch **gekennzeichnet**, daß in die Grundmasse Fisch-(produkte) und/oder Getreide- und/oder Gemüse- und/oder Obstprodukte eingearbeitet werden.

**4.** Verfahren nach einem oder mehreren der vorhergehenden Ansprüche dadurch **gekennzeichnet**, daß gefrorene bzw. stark gekühlte Milch zunächst mit einer zerkleinerten Grundmasse aus Fleisch und ggf. Fischprodukten und/oder Getreide-, Gemüse- bzw. Obstprodukten und ggf. mit Wasser homogenisiert wird, und die Milch dann zusammen mit der gesamten Masse filtriert wird.

**5.** Verfahren nach einem oder mehreren der vorhergehenden Ansprüche dadurch **gekennzeichnet,** daß das Fleisch zunächst gegebenenfalls getumbelt wird und anschließend durch Pressen, Zentrifugieren, Passieren, Quetschen oder ähnliche Maßnahmen in wasserlösliches Eiweiß und Bindegewebseiweiß aufgetrennt wird, wobei letzteres unter Verwendung von Milch, Elektrolytlösungen, Salzlösungen, Proteinlösungen oder Genußsäurelösungen oder Mischungen von diesen als Lösungsvermittler aufgeschlossen wird, und anschließend von dieser Lösung mittels Zentrifugieren und/oder Filtrieren und/oder anderer geeigneter Verfahren überflüssiges Wasser, Salze, Säuren, Elektrolyte abgetrennt werden, bevor das wasserlösliche Fleisch und das aufgeschlossene Bindegewebe unter Zugabe von Milch, filtrierter Milch, Wasser/Eis und weiteren Zutaten zu einer Grundmasse verarbeitet werden.

**6.** Verfahren nach einem oder mehreren der vorhergehenden Ansprüche dadurch **gekennzeichnet,** daß die Menge der filtrierten Milch in einem gewichtsmäßigen Verhältnis von 0,01:1 bis 20:1 in Bezug auf die Fleischmenge bzw. in Bezug auf die Menge der Mischung aus Fleisch/Fisch/Getreide-, Gemüse- und Obstprodukten eingestellt wird.

## Claims

**1.** A process for the production of low-fat and low-calorie meat dishes and sausage products wherein a ground basic compound of meat is mixed and emulsified with frozen or deepchilled milk and optionally water, characterised in that the production is carried out using milk which has been filtered at a pressure in the range of 2 to 40 bar and with a filter membrane pore size in the range of 0.3 to 100 nm.

**2.** A process as claimed in Claim 1, characterised in that pork, veal and/or beef is used.

**3.** A process as claimed in Claim 1, characterised in that fish (products) and/or cereal- and/or vegetable- and/or fruit products are incorporated into the basic compound.

**4.** A process as claimed in one or more of the preceding claims, characterised in that frozen or deep-chilled milk is firstly homogenized with a ground basic compound composed of meat and optionally fish products and/or cereal-, vegetable-or fruit products and optionally with water, whereupon the milk is filtered together with the combined compound.

**5.** A process as claimed in one or more of the preceding claims, characterised in that the meat is firstly optionally tumbled and then separated, by pressing, centrifugation, pulping, mashing or similar measures, into water-soluble protein and connective tissue protein, where the latter is solubilized using milk, electrolytic solutions, salt solutions, protein solutions or flavouring acid solutions or mixtures thereof as solubilizers, whereupon excess water, salts, acids, electrolytes are separated from this solution by means of centrifugation and/or filtration and/or other suitable processes before the water-soluble meat and the solubilized connective tissue are processed, with the addition of milk, filtered milk, water/ice and further ingredients, to form a basic compound.

**6.** A process as claimed in one or more of the preceding claims, characterised in that the quantity of filtered milk is set at a weight ratio of 0.01 : 1 to 20 : 1 in relation to the quantity of meat or in relation to the quantity of the mixture of meat/fish/cereal-, vegetable- and fruit products.

## Revendications

**1.** Procédé de fabrication de produits à base de viande et de charcuterie à faible teneur en graisse et calories, dans lequel on mélange et l'on met en émulsion une masse de base broyée composée de viande avec du lait congelé, respectivement fortement refroidi et, le cas échéant, de l'eau, caractérisé en ce que la fabrication s'effectue en utilisant du lait ayant été filtré sous une pression située dans la plage allant de 2 à 40 bar et avec une taille de pores de la membrane de filtration située dans la plage allant de 0,3 à 100 nm.

**2.** Procédé selon la revendication 1, caractérisé en ce que l'on utilise de la viande de porc, de veau et/ou de boeuf.

**3.** Procédé selon la revendication 1, caractérisé en ce que l'on introduit dans la masse de base, du poisson (des produits à base de poisson) et/ou des produits à base de céréales et/ou de légumes et/ou de fruits.

**4.** Procédé selon l'une ou plusieurs des revendications précédentes, caractérisé en ce que l'on procède d'abord à l'homogénéisation du lait congelé, respectivement fortement refroidi, avec une masse de base broyée composée de viande et, le cas échéant, de produits à base de poisson et/ou de céréales, légumes, respectivement de fruits, et, le cas échéant avec de l'eau, et le lait étant ensuite filtré, conjointement avec l'ensemble de la masse.

**5.** Procédé selon l'une ou plusieurs des revendications précédentes, caractérisé en ce que la viande est d'abord, le cas échéant, soumise à agitation, puis séparée par pressage, centrifugation, tamisage, écrasement et autres dispositions analogues, dans une albumine soluble dans l'eau et de l'albumine servant de structure de cohésion, où cette dernière est désagrégée en utilisant du lait, des solutions électrolytes, des solutions salines, des solutions protéiniques ou des solutions de stimulateurs du goût, des mélanges de ces produits, à titre de solubiliseur, puis on procède à sa séparation, de cette solution, par centrifugation et/ou filtrage et/ou un autre procédé approprié, de l'excès d'eau, de sels, d'acides, d'électrolyte, avant que la viande, soluble dans l'eau, et la structure de cohésion désagrégée soient traitées avec addition de' lait, lait filtré, eau/glace et autres ingrédients, en donnant une masse de base.

**6.** Procédé selon l'une ou plusieurs des revendications précédentes, caractérisé en ce que la quantité de lait filtré est établie avec un rapport de poids allant de 0,01:1 à 20:1, par rapport à la quantité de viande, respectivement à la quantité du mélange composé de viande/poisson/produits à base de céréales, légumes ou fruits.